(19) Europäisches Patentamt
European Patent Office
Office européen des brevets

(11) **EP 1 628 140 B1**

(12) **EUROPÄISCHE PATENTSCHRIFT**

(45) Veröffentlichungstag und Bekanntmachung des Hinweises auf die Patenterteilung:
**17.09.2008 Patentblatt 2008/38**

(51) Int Cl.:
***G01S 13/44*** *(2006.01)*     ***H01Q 19/02*** *(2006.01)*
***G01S 7/35*** *(2006.01)*

(21) Anmeldenummer: **05017148.7**

(22) Anmeldetag: **05.08.2005**

(54) **Interferometrische Monopuls-Empfangsantenne mit verbesserter Nebenkeulenunterdrückung**

Interferometric monopulse receiving antenna with improved sidelobe suppression

Antenne de réception mono-impulsion interférometrique avec suppression du lobe latéral améliorée

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.08.2004 DE 102004040015**

(43) Veröffentlichungstag der Anmeldung:
**22.02.2006 Patentblatt 2006/08**

(73) Patentinhaber: **S.M.S. Smart Microwave Sensors GmbH**
**38106 Braunschweig (DE)**

(72) Erfinder:
• **Mende, Ralph, Dr.**
**38106 Braunschweig (DE)**
• **Behrens, Marc, Dipl.-Ing.**
**38154 Königslutter (DE)**

(74) Vertreter: **Lins, Edgar et al**
**GRAMM, LINS & PARTNER**
**Theodor-Heuss-Strasse 1**
**38122 Braunschweig (DE)**

(56) Entgegenhaltungen:
EP-A- 0 544 081     DE-A1- 19 627 218
US-A- 3 711 858     US-A- 4 931 977
US-B1- 6 292 129

**Beschreibung**

Die Erfindung betrifft ein Verfahren zur Detektion eines von einer Sendeantenne ausgesandten elektromagnetischen Signals mittels wenigstens zweier zumindest im Wesentlichen gleicher Empfangsantennen, deren Empfindlichkeitskurve in einem Empfangswinkel symmetrisch zu einer Grundausrichtung ein Maximum mit abfallenden Flanken sowie daran anschließend Seitenkeulen mit wieder erhöhter Empfindlichkeit aufweist, wobei eine Winkelbestimmung für ein das ausgesandte Signal reflektierendes Objekt mit den beiden Empfangsantennen durch eine Phasenbestimmung in einem Eindeutigkeitsbereich erfolgt, dessen Grenzen durch den Abstand zwischen den Empfangsantennen vorgegeben ist.

Die Erfindung betrifft ferner eine Vorrichtung mit einer Sendeantenne zur Aussendung eines elektromagnetischen Signals und wenigstens zwei im Wesentlichen gleichen Empfangsantennen, deren Empfindlichkeitskurve in einem Empfangswinkel symmetrisch zu einer Grundausrichtung ein Maximum mit abfallenden Flanken sowie daran anschließend Seitenkeulen mit wieder erhöhter Empfindlichkeit aufweist, und mit einer Auswertungseinrichtung zur Bestimmung der Phasenunterschiede des von den beiden Empfangsantennen empfangenen, von einem Objekt reflektierten Signals in einem durch den Abstand der Empfangsantennen vorgegebenen Eindeutigkeitsbereich.

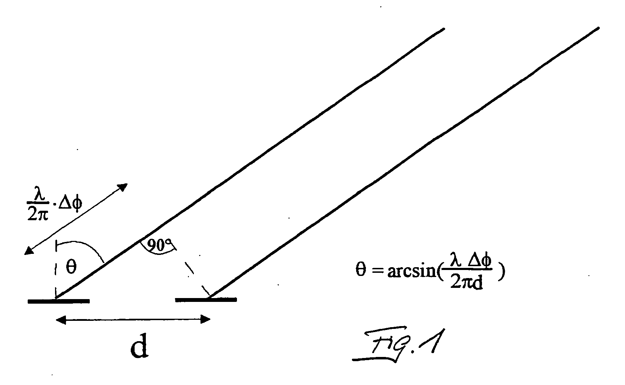

Es ist bekannt, den Winkel eines das Sendesignal reflektierenden Objekts durch die Bestimmung des Phasenversatzes zweier von Empfangsantennen empfangenen Empfangssignale zu bestimmen. Das sogenannte Phasen-Monopuls-Verfahren (Merrill I. Skolnik, Radar Handbook, Second Edition, McGraw Hill 1990, Seiten 18-9 ff. und 18-17 ff.) ist in Figur 1 verdeutlicht. Der Phasenunterschied $\Delta\phi$ entspricht einer Weglänge $\lambda / 2 \pi \cdot \Delta\Phi$. Wenn die beiden Empfangsantennen gleich ausgerichtet sind, ergibt sich die Beziehung $\sin\theta = \lambda / 2 \pi \cdot \Delta\Phi/d$.

Der Winkel $\theta$ bestimmt sich somit zu

$$\theta = \arcsin\left(\frac{\lambda \, \Delta\Phi}{2\pi d}\right).$$

Die Winkelmessung wird mehrdeutig, wenn der Phasenunterschied $\Delta\Phi \geq \pi$ bzw. $\Delta\Phi \leq -\pi$ ist. Der Bereich, in dem keine Mehrdeutigkeit auftritt, ist der Eindeutigkeitsbereich (Huder "Einführung in die Radartechnik" 1999, S. 146 bis 148). Üblicherweise werden derartige Systeme mit Radar-Wellenlängen betrieben. Für eine Wellenlänge $\lambda = 12{,}43$ mm und für einen Abstand $d = 14{,}55$ mm zwischen den Empfangsantennen ergibt sich ein Eindeutigkeitsbereich $\theta_u = \pm\, 25{,}39°$.

Für einen möglichst großen Eindeutigkeitsbereich müsste der Abstand d möglichst klein werden. Dies hätte allerdings auch sehr kleine Empfangsantennen zur Folge, die keine ausreichende Bündelung der Empfangssignale erlauben. Für eine möglichst gute Bündelung muss die Empfangsfläche der Empfangsantennen möglichst groß gewählt werden. Dies hätte aber einen unbrauchbar kleinen Eindeutigkeitsbereich zur Folge. Besonders störend sind für die Auswertung der Empfangssignale, also insbesondere die Bestimmung des Ortes und/oder der Geschwindigkeit des Objektes, die Seitenkeulen der Empfangsantennen, in denen die Empfangsantennen wieder eine erhöhte Empfindlichkeit aufweisen und daher von seitlichen Objekten starke Signale erzeugen, die die Detektion von Nutzsignalen innerhalb eines schmaleren Winkelbereichs um die Grundausrichtung der Empfangsantennen herum stören können. Dies gilt insbesondere für Radarsysteme an Kraftfahrzeugen, die beispielsweise bei 24 GHz betrieben werden und beispielsweise als automatische Abstandssensoren für - regelmäßig in derselben Fahrspur - vorausfahrende Fahrzeuge dienen.

Der vorliegenden Erfindung liegt daher die Aufgabe zugrunde, die Detektion mittels der Empfangsantennen hinsichtlich der Eindeutigkeit und der Signalbündelung zu verbessern.

Zur Lösung dieser Aufgabe ist erfindungsgemäß ein Verfahren der eingangs erwähnten Art **dadurch gekennzeichnet, dass** der Abstand so gewählt wird, dass die Grenzen des Eindeutigkeitsbereichs die Seitenkeulen schneiden und dass eine Detektion des reflektierenden Objekts mittels einer vektoriellen Summe der Signale der Empfangsantennen vorgenommen wird.

Zur Lösung der Aufgabe ist ferner eine Vorrichtung der eingangs erwähnten Art gekennzeichnet durch einen Abstand zwischen den Empfangsantennen, durch den die Grenzen des Eindeutigkeitsbereichs die Seitenkeulen schneiden und durch eine Stufe zur vektoriellen Summenbildung der von den Empfangsantennen empfangenen Signale.

Die vorliegende Erfindung beruht auf einem neuen Kriterium für die Einstellung des Abstandes zwischen den Empfangsantennen für die Winkelmessung. Der Abstand wird so eingestellt, dass die Grenzen des Eindeutigkeitsbereichs durch die (allein störenden ersten) Seitenkeulen der Empfindlichkeitskurve der Empfangsantennen verlaufen. Hierdurch wird ein relativ großer Eindeutigkeitsbereich generiert. Durch die vektorielle Addition zweier Empfangssignale werden die Signalanteile, die von Objekten in der Grundausrichtung oder in einem schmalen Winkel um die Grundausrichtung herum, die somit zu keiner wesentlichen Phasenverschiebung führen, amplitudenmäßig vollständig addiert. Hingegen führen die Signalanteile von Objekten, die sich an den Grenzen des Eindeutigkeitsbereichs befinden, zu einer Phasenverschiebung von π (180°), sodass die Signalanteile an den Grenzen des Eindeutigkeitsbereichs, also die Signalanteile der Seitenkeulen, voneinander abgezogen werden, sodass sie sich - im Wesentlichen gleiche Empfangsantennen vorausgesetzt - aufheben oder zumindest so erheblich bedämpfen, dass diese Signalanteile keine merkbare Rolle mehr spielen. Demgemäß wird für die Auswertung der Position und/oder der Geschwindigkeit des Objektes, an dem die Signale reflektiert werden, die vektorielle Summe der Empfangssignale verwendet werden, wodurch ein Empfangssignal zur Verfügung steht, das einer erheblich verbesserten Bündelung in der Grundausrichtung entspricht, wobei sonst aufgrund der höheren Empfindlichkeit störende Signalanteile aus den Seitenkeulen eliminiert werden.

Durch die erfindungsgemäße Wahl des Abstandes zwischen den Empfangsantennen einerseits und die Auswertung der vektoriellen Summe der Empfangssignale andererseits steht für die Auswertung ein verbessertes Signal zur Verfügung, das störende Anteile der Seitenkeulen nicht mehr aufweist.

Die Grundausrichtungen der Empfangsantennen liegen zweckmäßigerweise parallel zueinander.

Für das erfindungsgemäße Verfahren bzw. den Betrieb der erfindungsgemäßen Vorrichtung ist es zweckmäßig, wenn mit der Sendeantenne ein Sendesignal aus wenigstens zwei, aus zahlreichen Signalabschnitten mit einer um jeweils eine Frequenzstufe gegenüber dem vorherigen Signalabschnitt verschobener Frequenz gebildeten Teilsignalen gebildet wird, deren Signalabschnitte abwechselnd ausgesandt werden und sich über einen vorgegebenen Modulationsbereich erstrecken. Die Verwendung eines derartigen Sendesignals und seine Eignung zur Bestimmung des Ortes und der Geschwindigkeit des reflektierenden Objektes ist in DE 100 50 278 A1 beschrieben, auf deren Offenbarung hier verwiesen wird. Vorzugsweise wird das Sendesignal aus drei Teilsignalen gebildet.

Für die konstruktive Ausbildung der erfindungsgemäßen Vorrichtung ist es vorteilhaft, wenn die Antennen Planarantennen sind, die vorzugsweise aus in wenigstens einer Reihe angeordneten Antennenfeldern (Patches) gebildet sind, wobei in der Praxis zwei parallel nebeneinander angeordnete Reihen von Antennenfeldern bewährt sind. Die Grundausrichtung der Empfangsantennen steht senkrecht auf der Ebene der Antennenfelder.

Die Erfindung soll im Folgenden anhand der beigefügten Zeichnungen näher erläutert werden. Es zeigen:

Figur 1 -   eine schematische Darstellung der Winkelermittlung aus einer gemessenen Phasendifferenz der Empfangssignale zweier Empfangsantennen

Figur 2 -   eine schematische Draufsicht auf eine Ausführungsform einer Antennenanordnung einer erfindungsgemäßen Vorrichtung mit einer Sendeantenne und zwei Empfangsantennen

Figur 3 -   eine schematische Darstellung eines verwendeten Sendesignals

Figur 4 -   eine schematische Darstellung der Verarbeitung der Empfangssignale der beiden Empfangsantennen

Figur 5 -   eine Darstellung der erfindungsgemäß gelegten Grenzen des Eindeutigkeitsbereichs für die Winkelmessung.

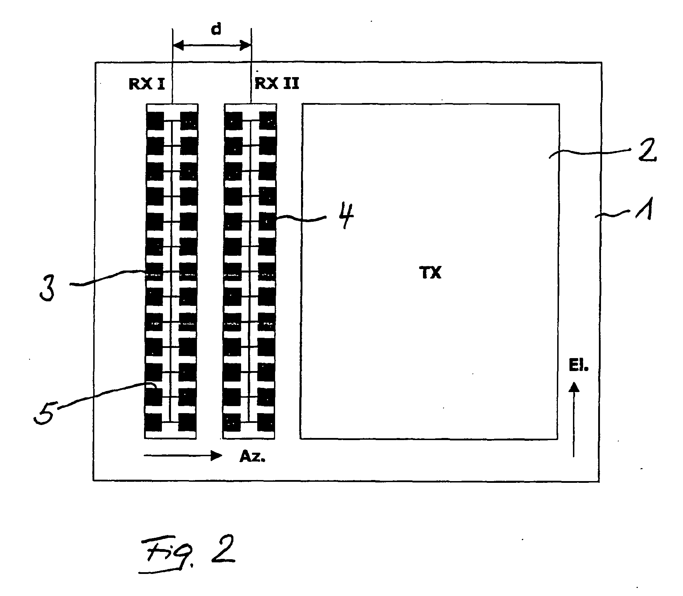

Figur 2 zeigt eine Frontansicht einer Antennenanordnung auf einer Trägerplatte 1. Auf dieser befindet sich eine eine große Fläche einnehmende Sendeantenne (TX) 2 und zwei streifenförmig ausgebildete Empfangsantennen 3, 4, die parallel zueinander ausgerichtet sind und deren Mitten in Längsrichtung einen Abstand d voneinander aufweisen.

Sowohl die Sendeantenne 2 als auch die Empfangsantennen 3 bestehen aus einer Vielzahl von regelmäßig angeordneten kleinen quadratischen Antennenfeldern 5, die innerhalb der jeweiligen Antenne 2, 3, 4 miteinander verbunden sind. Die Technik dieser aus Antennenfeldern 5 gebildeten Antennen 2, 3, 4 in Form von Planarantennen ist bekannt. Die Ebene der Planarantennen definiert einen Azimutwinkel und einen Elevationswinkel. Die Winkelmessung erfolgt für den Azimutwinkel um eine Bezugslinie, die parallel zu den Reihen der Antennenfelder 5 verläuft.

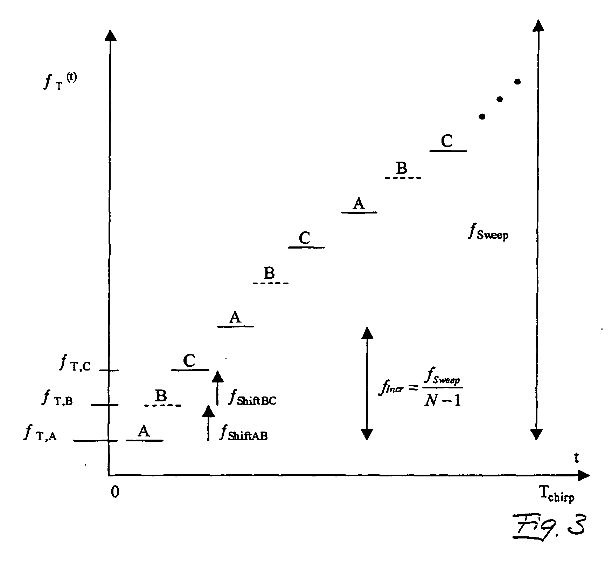

Figur 3 verdeutlicht die Signalform eines über eine Sendezeit $t_{chirp}$ ausgesandten Sendesignals, das aus drei Teilsignalen A, B, C besteht. Die Teilsignale setzen sich jeweils aus Signalabschnitten zusammen, die jeweils für eine kurze Zeit eine konstante Frequenz $f_{T,A}$, $f_{T,B}$, $f_{T,C}$ aufweisen. Die Signalabschnitte, die zu einem Signal A, B, C gehören, weisen einen Frequenzabschnitt $f_{Incr} = \dfrac{f_{Sweep}}{N-1}$ auf.

Die nacheinander ausgesandten Signalabschnitte der verschiedenen Signale A, B, C sind jeweils um eine Frequenz $f_{ShiftAB}$ bzw. $f_{ShiftBC}$. Während der Aussendezeit $t_{chirp}$ für das Sendesignal wird der Modulationsbereich $f_{Sweep}$ in N-Stufen von jedem Signal A, B, C durchlaufen. Aufgrund der Verwendung mehrerer Empfangsantennen wird eine entsprechende Anzahl von Empfangssignalen gewonnen. Im Folgenden wird von zwei Empfangsantennen ausgegangen. Die dort empfangenen Signale sind

Antenne I:
$\underline{m}_{AI}$ (n); $\underline{m}_{BI}$ (n) $\underline{m}_{CI}$ (n); n = 0... N-1,

Antenne II:

$\underline{m}_{AII}$ (n); $\underline{m}_{BII}$ (n) $\underline{m}_{CII}$ (n); n = 0... N-1.

Wie bei einem Monopulsempfänger bekannt, kann durch Auswertung der gleichzeitig abgetasteten Signale $\underline{m}_{AI}$ (n) und $\underline{m}_{AII}$ (n) von beiden Empfängern bezüglich der relativen Phasenlage der Winkel zu einem oder mehreren Objekten bestimmt werden. Dies geschieht in der Regel nach einer Transformation der Signale in den Frequenzbereich.

Antenne I:

$\underline{m}_{AI}$ (n) $\rightarrow$ $\underline{M}_{AI}$ (K)
$\underline{m}_{BI}$ (n) $\rightarrow$ $\underline{M}_{BI}$ (k)
$\underline{m}_{CI}$ (n) $\rightarrow$ $\underline{M}_{CI}$ (k)

Antenne II:

$\underline{m}_{AII}$ (n) $\rightarrow$ $\underline{M}_{AII}$ (k)
$\underline{m}_{BII}$ (n) $\rightarrow$ $\underline{M}_{BII}$ (k)
$\underline{m}_{CII}$ (n) $\rightarrow$ $\underline{M}_{CII}$ (k)

n = 0... N-1, Nummer des Abtastwertes im Zeitbereich:
k = 0... K-1, Nummer der Spektrallinie im Frequenzbereich,
in der Regel ist K=N.

Aus mindestens einem Spektrum ist die Detektion mehrerer Objekte (Anzahl O) o = 0...O-1 möglich.

Wie in DE 100 50 278.4 ausführlicher erläutert wurde, sind bei der Spektrallinie $K_{peak,RV}$ die Entfernung R und die relative Geschwindigkeit v des Objektes o (entsprechend der Spektrallinie $K_{peak,RV}$ ) ermittelbar, wenn wenigstens $\underline{M}_{AI}$ ($K_{peak,RV}$) und $\underline{M}_{BI}$ ($K_{peak,RV}$) zur Berechnung herangezogen werden. Die Auswertung der weiteren Signale
$\underline{M}_{CI}$ ($K_{peak,RV}$)
$\underline{M}_{AII}$ ($K_{peak,RV}$)
$\underline{M}_{BII}$ ($K_{peak,RV}$)
$\underline{M}_{CII}$ ($K_{peak,RV}$)
ist für die Bestimmung von R und v ebenfalls möglich. Diese Auswertung kann das Ergebnis verbessern, ist aber nicht unbedingt erforderlich.

Der Winkel der Grundausrichtung der Antennenanordnung zu einem Objekt lässt sich, wie bei einem Monopulsempfänger üblich, durch eine Phasendifferenzmessung, beispielsweise aus den Spektren AI und AII ebenfalls an der Position $K_{peak,RV}$ berechnen:

$$\underline{M}_{AI} (K_{peak,RV}) = M_{AI} (K_{peak,RV}) \cdot e^{j\phi AI (K peak,RV)}$$

(komplexer Wert aus dem Spektrum AI),

$$\underline{M}_{AII} (K_{peak,RV}) = M_{AII} (K_{peak,RV}) \cdot e^{j\phi AII (K peak,RV)}$$

(komplexer Wert aus dem Spektrum AII),

$$\Delta\phi_A (K_{peak,RV}) = \phi_{AI} (K_{peak,RV}) - \phi_{AII} (K_{peak,RV})$$

Phasendifferenz der Spektren AI und AII.

Die Winkelposition des Objektes ergibt sich zu

$$\theta_A(\kappa_{peak,RV}) = \arcsin\left(\frac{\Delta\phi_A(\kappa_{peak,RV}) \cdot \lambda}{2\pi \cdot d}\right).$$

Hierbei ist λ die Wellenlänge und d der Abstand zwischen zwei zur Messung herangezogenen Empfangsantennen.

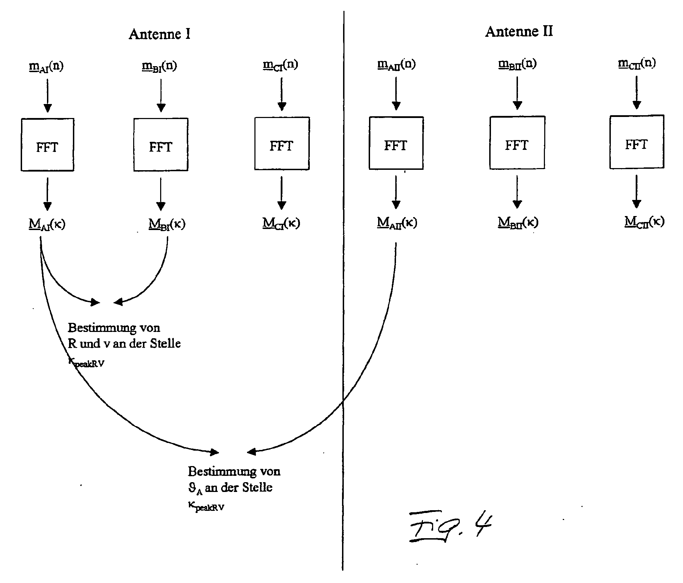

Diese Bestimmung ist für jedes Objekt o = 0...O-1 möglich, und zwar jeweils an der zum Objekt korrespondierenden spektralen Position ($K_{peak,RV}$). Der Ablauf der Auswertung ist in Figur 4 mit den oben beschriebenen Schritten nochmals grafisch verdeutlicht.

Wie oben erläutert worden ist, lässt sich der Winkel mit dem Phasen-Monopuls-Verfahren nur in einem Eindeutigkeitsbereich $\theta_U$ eindeutig bestimmen. Außerhalb dieses Intervalls muss zur gemessenen Phasendifferenz Δφ ein Wert von 2π addiert bzw. subtrahiert werden, um den Winkel θ zu bestimmen.

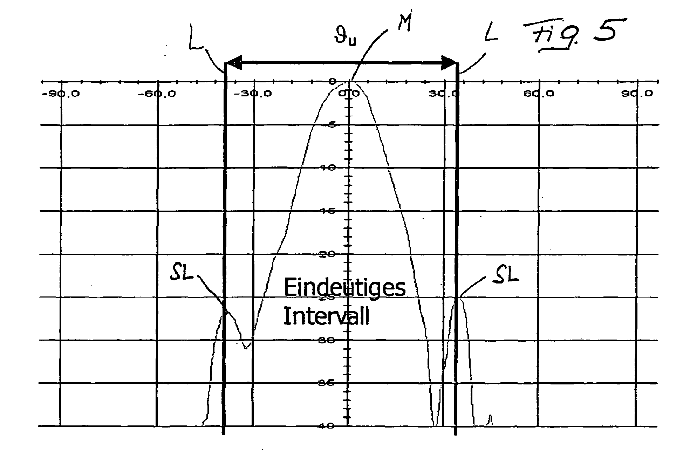

In Figur 5 ist eine Empfindlichkeitskurve für eine Empfangsantenne dargestellt. Diese lässt ein zentrales Maximum M in der Grundausrichtung (0°) der Empfangsantenne erkennen. Vom Maximum aus fallen etwa symmetrisch Flanken ab bis zu einem Minimum, das bei einem Azimutwinkel von knapp 30° liegt. Daran schließt sich jeweils eine Seitenkeule SL an, die zwischen 35 und 40° Azimutwinkel liegt. Der Eindeutigkeitsbereich $\theta_U$ ergibt sich - wie oben dargelegt - aus dem Abstand d zwischen den Empfangsantennen (Figuren 1, 2). Erfindungsgemäß wird der Abstand d so gewählt, dass die Grenzen L des Eindeutigkeitsbereichs mit den Seitenkeulen SL zusammenfallen, vorzugsweise mit den Maxima der Seitenkeulen.

Dies hat allerdings zur Folge, dass die Empfangsantennen nicht sehr groß, also nicht scharf bündelnd, aufgebaut werden können. Die Empfangsantennen haben somit eine breitere Charakteristik als eigentlich gewünscht ist.

Erfindungsgemäß wird eine vektorielle Addition der komplexen Empfangssignale der Empfangsantennen 3, 4 durchgeführt. Die vektorielle Addition kann sowohl im Zeitbereich als auch im Frequenzbereich durchgeführt werden. Für die Addition im Frequenzbereich ergibt sich (VS = Vektorsumme)

$$\underline{M_{VS}}(\kappa_{peak,RV}) = \underline{M_{AI}}(\kappa_{peak,RV}) + \underline{M_{AII}}(\kappa_{peak,RV}).$$

Aufgrund der vektoriellen Addition ergibt sich eine maximale Empfindlichkeit des Antennensystems durch konstruktive Überlagerung an der Stelle, an der die Phasendifferenz Null ist, also auch beim Winkel Null zur Grundausrichtung der Empfangsantennen 3, 4.

An der Stelle, an der sich die Phasendifferenz π ergibt, entsteht durch destruktive Überlagerung eine minimale Empfindlichkeit. Erfindungsgemäß ist dies an den Grenzen L des Phasendifferenz- bzw. Winkelintervalls der Fall. Da die Grenzen L in den Bereich der Seitenkeulen SL gelegt sind, löschen sich somit die Seitenkeulen SL, zumindest weitgehend, aus, sodass unerwünschte Reflektionen aus den Seitenkeulen unterdrückt werden. Die in Figur 4 erläuterte Bestimmung von Ort R und Geschwindigkeit v an der Stelle $K_{peak,RV}$ lässt sich somit nach der Durchführung der vektoriellen Addition der Signale der Antennen I und II mit der verbesserten Bündelung durchführen.

Das erfindungsgemäße Verfahren erlaubt selbstverständlich auch die Maximierung des Empfangs in andere Richtung als den Winkel Null, wenn bei der Bildung der Vektorsumme mindestens ein Summand mit einem Phasen-Offset beaufschlagt wird.

Die Abtastung ist reell und komplex möglich. Die Vektorsumme kann bei komplexwertiger Abtastung im Zeit- oder Frequenzbereich gebildet werden, bei reeller Abtastung nur im Frequenzbereich.

Das erfindungsgemäße Verfahren wird zweckmäßig so ausgeführt, dass die Sendeantenne 2 und eine der Empfangsantennen 3, 4 auf der Platine 1 angeordnet werden. Dann wird die Empfindlichkeitskurve für die bereits realisierte Empfangsantenne (beispielsweise 4) gemessen. Dann wird der Abstand d bestimmt, der erforderlich ist, um die Grenzen L des Eindeutigkeitsbereichs $\theta_U$ mit den gemessenen Seitenkeulen SL zusammenfallen zu lassen, vorzugsweise im Maximum der Seitenkeulen SL zu positionieren. Nach Ermittlung des Abstands d wird die zweite Empfangsantenne 3 auf die Platine aufgebracht, sodass dann ein erfindungsgemäßes Antennensystem realisiert ist. Zur Durchführung der Erfindung wird die Detektion von Objekten mit der gebildeten vektoriellen Summe der einander entsprechenden Empfangssignale der Antennen 3, 4 ermittelt und daran anschließend die Bestimmung der Parameter R, v durchgeführt.

**Patentansprüche**

1. Verfahren zur Detektion eines von einer Sendeantenne (2) ausgesandten elektromagnetischen Signals mittels wenigstens zweier zumindest im Wesentlichen gleicher Empfangsantennen (3, 4), deren jeweilige Empfindlichkeitskurve in einem Empfangswinkel symmetrisch zu einer Grundausrichtung ein Maximum (M) mit abfallenden Flanken sowie daran anschließend Seitenkeulen (SL) mit wieder erhöhter Empfindlichkeit aufweist, wobei eine Winkelbestimmung für ein das ausgesandte Signal reflektierendes Objekt mit den beiden Empfangsantennen (3, 4) durch eine Phasenbestimmung in einem Eindeutigkeitsbereich ($\theta_U$) erfolgt, dessen Grenzen (L) durch den Abstand (d) zwischen den Empfangsantennen (3, 4) vorgegeben ist, **dadurch gekennzeichnet, dass** der Abstand (d) so gewählt wird, dass die Grenzen (L) des Eindeutigkeitsbereichs ($\theta_U$) die Seitenkeulen (SL) schneiden und dass eine Detektion des reflektierenden Objekts mittels einer vektoriellen Summe der Signale der Empfangsantennen (3, 4) vorgenommen wird.

2. Verfahren nach Anspruch 1, **dadurch gekennzeichnet, dass** die Grundausrichtungen der Empfangsantennen (3, 4) parallel zueinander liegen.

3. Verfahren nach Anspruch 1 oder 2, **dadurch gekennzeichnet, dass** mit der Sendeantenne ein Sendesignal aus wenigstens zwei aus zahlreichen Signalabschnitten mit einer um jeweils eine Frequenzstufe ($f_{incr}$) gegenüber dem vorhergehenden Signalabschnitt verschobene Frequenz gebildeten Teilsignalen (A, B, C) gebildet wird, deren Signalabschnitte abwechselnd ausgesandt werden und sich über einen vorgegebenen Frequenzbereich ($f_{Sweep}$) erstrecken.

4. Verfahren nach Anspruch 3, **dadurch gekennzeichnet, dass** das Sendesignal aus drei Teilsignalen (A, B, C) gebildet wird.

5. Vorrichtung mit einer Sendeantenne (2) zur Aussendung eines elektromagnetischen Signals und wenigstens zwei im Wesentlichen gleichen Empfangsantennen (3, 4), deren jeweilige Empfindlichkeitskurve in einem Empfangswinkel symmetrisch zu einer Grundausrichtung ein Maximum (M) mit abfallenden Flanken sowie daran anschließend Seitenkeulen (SL) mit wieder erhöhter Empfindlichkeit aufweist, mit einer Auswertungseinrichtung zur Bestimmung der Phasenunterschiede des von den beiden Empfangsantennen (3, 4) empfangenen, von einem Objekt reflektierten Signals in einem durch den Abstand (d) der Empfangsantennen (3, 4) vorgegebenen Eindeutigkeitsbereich ($\theta u$), **gekennzeichnet durch** einen Abstand (d), **durch** den die Grenzen (L) des Eindeutigkeitsbereichs ($\theta_U$) die Seitenkeulen (SL) schneiden und **durch** eine Einrichtung zur vektoriellen Summenbildung der von den Empfangsantennen (3, 4) empfangenen Signale.

6. Vorrichtung nach Anspruch 5, **dadurch gekennzeichnet, dass** die Antennen (3, 4) Planarantennen sind.

7. Vorrichtung nach Anspruch 6, **dadurch gekennzeichnet, dass** die Planarantennen in wenigstens einer Reihe angeordnete Antennenfelder (5) aufweisen.

8. Vorrichtung nach Anspruch 7, **dadurch gekennzeichnet, dass** die Planarantennen jeweils zwei parallele, nebeneinander angeordnete Reihen von Antennenfeldern (5) aufweisen.

**Claims**

1. A method for detection of an electromagnetic signal, which is transmitted from a transmitting antenna (2), by means of at least two at least essentially identical receiving antennas (3, 4), whose respective sensitivity curve has a maximum (M) with falling flanks as well as sidelobes (SL) adjacent to it with sensitivity increased again at a reception angle symmetrically with respect to a basic alignment, with angle determination for an object which reflects the transmitted signal being carried out by the two receiving antennas (3, 4) by phase determination in an unambiguity area ($\theta_u$) whose boundaries (L) are predetermined by the distance (d) between the receiving antennas (3, 4), wherein the distance (d) is chosen such that the boundaries (L) of the unambiguity area ($\theta_u$) intersect the sidelobes (SL), and wherein the reflective object is detected by means of vectorial addition of the signals from the receiving antennas (3, 4).

2. The method as claimed in claim 1, wherein the basic alignments of the receiving antennas (3, 4) are parallel to one another.

3. The method as claimed in claim 1 or 2, wherein the transmitting antenna forms a transmission signal from at least two signal elements (A, B, C) which are formed from numerous signal sections at a frequency which is in each case shifted by one frequency step ($f_{incz}$) with respect to the previous signal section, the signal sections of which signal elements (A, B, C) are transmitted alternately and extend over a predetermined frequency range ($f_{sweep}$).

4. The method as claimed in claim 3, wherein the transmission signal is formed from three signal elements (A, B, C).

5. An apparatus having a transmitting antenna (2) for transmission of an electromagnetic signal, and at least two essentially identical receiving antennas (3, 4), whose respective sensitivity curve has a maximum (M) with falling flanks as well as sidelobes (SL) adjacent to it with sensitivity increased again at a reception angle symmetrically with respect to a basic alignment, having an evaluation device for determination of the phase differences of the signal which is received by the two receiving antennas (3, 4) and has been reflected by an object, in an unambiguity area ($\theta_u$) which is predetermined by the distance (d) between the receiving antennas (3, 4), distinguished by a distance (d) by which the boundaries (L) of the unambiguity area ($\theta_u$) intersect the sidelobes (SL), and by a device for vectorial addition of the signals received by the receiving antennas (3, 4).

6. The apparatus as claimed in claim 5, wherein the antennas (3, 4) are planar antennas.

7. The apparatus as claimed in claim 6, wherein the planar antennas have antenna patches (5) arranged in at least one row.

8. The apparatus as claimed in claim 7, wherein the planar antennas each have two parallel rows of antenna patches (5) arranged alongside one another.

## Revendications

1. Procédé pour la détection un signal électromagnétique émis par une antenne émettrice (2), au moyen d'au moins un au minimum doublet d'antennes réceptrices (3, 4) sensiblement identiques, dont la courbe de sensibilité respective présente pour chacune, dans une plage angulaire de réception symétrique autour d'une orientation de base, un maximum (M) avec des flancs descendants ainsi que des lobes latéraux (SL) adjacents avec une remontée de sensibilité, dans lequel s'effectue une détermination angulaire, pour un objet réfléchissant un signal émis, avec les deux antennes réceptrices (3, 4) par une détermination de phase dans une zone significative ($\theta_U$), dont les limites (L) sont fixées par l'écartement (d) entre les antennes réceptrices (3, 4), **caractérisé en ce que** l'écartement (d) est choisi de façon à ce que les limites (L) de la zone significative ($\theta_U$) coupe les lobes latéraux (SL) et **en ce que** la détection de l'objet réfléchissant est obtenue à l'aide d'une somme vectorielle des signaux des antennes réceptrices (3, 4).

2. Procédé selon la revendication 1, **caractérisé en ce que** les orientations de base des antennes réceptrices (3, 4) sont parallèles entre elles.

3. Procédé selon l'une quelconque des revendications 1 ou 2, **caractérisé en ce qu'**un signal d'émission pour l'antenne émettrice est constitué à partir d'au moins deux sous signaux (A, B, C), formés à partir d'une multitude de tronçons de signal présentant chacun un palier de fréquence décalé par rapport à la fréquence du précédent tronçon, les tronçons desdits sous signaux étant émis de façon alternée et s'étendant sur une plage de fréquence ($f_{sweep}$) prédéterminée.

4. Procédé selon la revendication 3, **caractérisé en ce que** le signal d'émission est constitué de trois sous signaux (A, B, C).

5. Dispositif avec une antenne émettrice (2) pour l'émission d'un signal électromagnétique et au moins deux antennes réceptrices (3, 4) sensiblement identiques, dont la courbe de sensibilité respective présente pour chacune, dans une plage angulaire de réception symétrique autour d'une orientation de base, un maximum (M) avec des flancs descendants ainsi que des lobes latéraux (SL) adjacents avec une remontée de sensibilité, avec des moyens de restitution pour l'identification dans une zone significative ($\theta_U$), à partir de l'écartement (d) des antennes réceptrices (3, 4), des différences de phase de signaux réfléchis par un objet et reçus par les antennes réceptrices (3, 4), **caractérisé par** un écartement (d) par lequel les limites (L) de la zone significative ($\theta_U$) coupent les lobes latéraux (SL), et par un agencement pour le calcul de la somme vectorielle des signaux reçus par les antennes réceptrices (3, 4).

6. Dispositif selon la revendication 5, **caractérisé en ce que** les antennes (3, 4) sont des antennes planes.

7. Dispositif selon la revendication 6, **caractérisé en ce que** les antennes planes présentent des zones d'antenne (5) arrangées en au moins une rangée.

8. Dispositif selon la revendication 7, **caractérisé en ce que** les antennes planes présentent chacune deux rangées parallèles, arrangées l'une à côté de l'autre, de zones d'antennes (5).

$$\theta = \arcsin(\frac{\lambda}{2\pi d} \Delta\phi)$$

FIG. 1

**Fig. 2**

$$f_{Incr} = \frac{f_{Sweep}}{N-1}$$

*Fig. 3*

Antenne I                                          Antenne II

$\underline{m}_{AI}(n)$        $\underline{m}_{BI}(n)$        $\underline{m}_{CI}(n)$        $\underline{m}_{AII}(n)$        $\underline{m}_{BII}(n)$        $\underline{m}_{CII}(n)$

| FFT | FFT | FFT | FFT | FFT | FFT |

$\underline{M}_{AI}(\kappa)$        $\underline{M}_{BI}(\kappa)$        $\underline{M}_{CI}(\kappa)$        $\underline{M}_{AII}(\kappa)$        $\underline{M}_{BII}(\kappa)$        $\underline{M}_{CII}(\kappa)$

Bestimmung von
R und v an der Stelle
$\kappa_{peakRV}$

Bestimmung von
$\vartheta_A$ an der Stelle
$\kappa_{peakRV}$

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10050278 A1
- DE 10050278

**In der Beschreibung aufgeführte Nicht-Patentliteratur**

- **MERRILL I. SKOLNIK.** Radar Handbook. McGraw Hill, 1990, 18-918-17
- **HUDER.** *Einführung in die Radartechnik,* 1999, 146-148